# EUROPEAN PATENT APPLICATION

(11) **EP 3 076 033 A1**
(43) Date of publication of application: **05.10.2016**
(21) Application number: 14863096.5
(22) Date of filing: 11.11.2014
(51) Int. Cl.: F16C 11/06, F16J 3/04, F16J 15/52

(54) **BALL JOINT DUST COVER**

(30) Priority: 25.11.2013 JP 2013242738
(71) Applicant: NOK Corporation, Tokyo 105-8585 (JP)
(72) Inventor: HOSEN Tatsuro, Makinohara-shi Shizuoka 421-0532 (JP); KANAGAWA Koji, Makinohara-shi Shizuoka 421-0532 (JP)
(74) Representative: TBK
(86) International application number: PCT/JP2014/079791
(87) International publication number: WO 2015/076145

(57) **Abstract**

The object of the present invention is to improve the formability of a reinforcing ring by providing a dust cover(1) for a ball joint in which decrease in the tracking property of a shaft side attaching portion(12) against an oscillation of a ball stud is prevented. In order to achieve this object, the reinforcing ring(15) is buried in the shaft side attaching portion(12) which is closely fitted and fixed to an outer peripheral surface of a shaft portion(203b) of the ball stud(203) of the ball joint(200), a first inner peripheral projection and a second inner peripheral projection are formed at different axial positions in the reinforcing ring(15) at predetermined intervals in a circumferential direction, the first inner peripheral projection(151) and the second inner peripheral projection(152) having diameters which are slightly greater than an inner peripheral surface of the shaft side attaching portion(12) in their end portions in an inner diameter side as well as extending to the inner diameter side, and the first inner peripheral projection (151) and the second inner peripheral projection(152) exist on phases which do not lap over each other in an axial direction.

## Description

### BACKGROUND OF THE INVENTION

### Field of the Invention

The present invention relates to a dust cover which is installed to a ball joint such as a steering device of a vehicle, and more particularly to a dust cover which is improved in a tracking property to an oscillation of a ball stud.

### Description of the Conventional Art

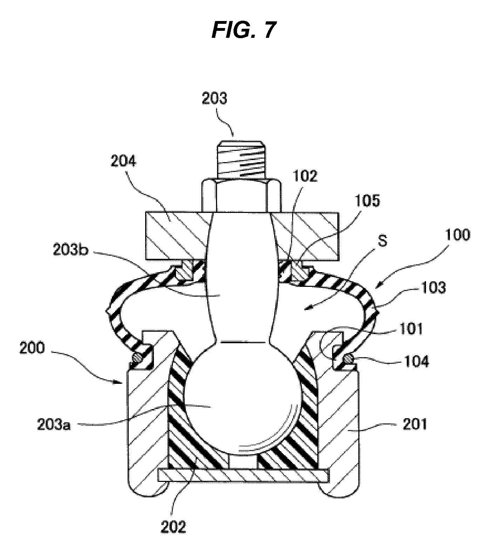

As the dust cover installed to the ball joint such as the steering device of the vehicle, there has been conventionally known a dust cover shown in Fig. 7.

More specifically, this kind of dust cover 100 is formed by a rubber-like elastic material (a rubber material or a synthetic resin material having a rubber-like elasticity), and is provided with a socket side attaching portion 101 which is fastened and fixed to an outer periphery of a socket 201 retaining a bearing 202 of a ball joint 200 by a snap ring 104 and has a relatively larger diameter, a shaft side attaching portion 102 which is brought into close contact with a knuckle 204 fixed to a shaft portion 203b of a ball stud 203 of the ball joint 200, is closely fitted and fixed to an outer periphery of the shaft portion 203b and has a relatively smaller diameter, and a tubular flexible membrane portion 103 which connects between the socket side attaching portion 101 and the shaft side attaching portion 102. A reinforcing ring 105 made of a synthetic resin is buried in the shaft side attaching portion 102, the reinforcing ring 105 being provided for enhancing a close contact property with the shaft portion 203b of the ball stud 203.

Further, this kind of dust cover 100 prevents grease (not shown) filled at an appropriate amount in an internal space S from leaking out to an external portion, prevents dusts from intruding into a fitting portion between the bearing 202 and the spherical end portion 203a of the ball stud 203 from the external portion, and is structured such that the flexible membrane 103 freely deforms in connection with oscillation of the ball stud 203 in relation to the socket 201 (refer, for example, to the following patent document 1).

### PRIOR ART DOCUMENT

### Patent Document

Patent Document 1: Japanese Unexamined Patent Publication No. 62-137408

### SUMMARY OF THE INVENTION

### Problem to be Solved by the Invention

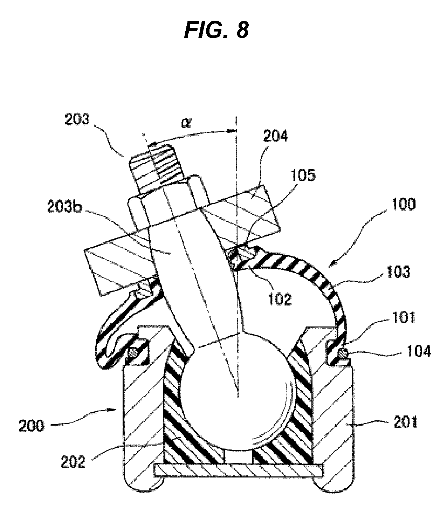

However, since the rubber-like elastic material of the dust cover 100 is hardened and a retractility of the flexible membrane portion 103 is deteriorated, at the low temperature time, a tracking property of the shaft side attaching portion 102 of the dust cover 100 is lowered in relation to the shaft portion 203b of the ball stud 203 when the ball stud 203 is oscillated greatly at an angle α as shown in Fig. 8. As a result, there is generated "opening" that the seal protrusion of the shaft side attaching portion 102 is away from the shaft portion 203b of the ball stud 203 and the knuckle 204, and there is a risk that a sealing function is lowered.

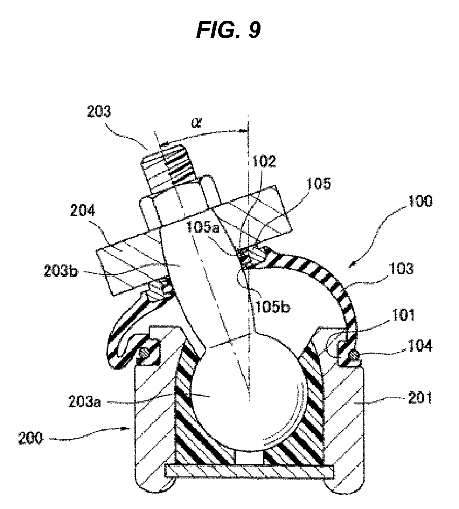

Consequently, the inventors of the present invention have found that it is effective to form a plurality of inner peripheral collar portions 105a and 105b having inner diameters which are slightly greater than an inner peripheral surface of the shaft side attaching portion 102, in an inner peripheral portion of the reinforcing ring 105 which is buried in the shaft side attaching portion 102 as shown in Fig. 9, in order to solve the problem mentioned above. According to the structure mentioned above, a close contact force of the shaft side attaching portion 102 applied to the shaft portion 203b of the ball stud 203 is backed up by the inner peripheral collar portion 105a of the reinforcing ring 105. Therefore, even in the case that the retractility of the flexible membrane portion 103 is lowered by the hardening of the rubber-like elastic material of the dust cover 100 at the low temperature time, the tracking property against the oscillation of the ball stud 203 is compensated. As a result, it is possible to prevent the sealing performance from being lowered due to the "opening" that the inner peripheral seal protrusion of the shaft side attaching portion 102 is away from the shaft portion 203b of the ball stud 203.

However, in the case that the reinforcing ring 105 having a plurality of inner peripheral collar portions 105a as shown in Fig. 9 is formed by a synthetic resin, the inner peripheral collar portions 105a and 105b form an undercut in order to enable the release, it is necessary to form a metal mold into a complicated structure which is provided with a slide core and so on, or it is necessary to have a step of forming the reinforcing ring 105 into a plurality of parts separately and integrating the parts after the formation. Thus, there is room for improvement in the formation of the reinforcing ring.

The present invention is made by taking the above points into consideration, and a technical object of the present invention is to provide a dust cover for a ball joint which prevents a tracking property of a shaft side attaching portion from being lowered against an oscillation of a ball stud, and to improve a formability of a reinforcing ring.

### Means for Solving the Problem

As a means for effectively solving the technical object mentioned above, a dust cover for a ball joint according to a first aspect of the present invention is characterized in that a reinforcing ring is buried in a shaft side attaching portion which is closely fitted and fixed to an outer peripheral surface of a shaft portion of a ball stud of the ball joint, a first inner peripheral projection and a second inner peripheral projection are formed at different axial positions in the reinforcing ring at predetermined intervals in a circumferential direction, the first inner peripheral projection and the second inner peripheral projection having diameters which are slightly greater than an inner peripheral surface of the shaft side attaching portion in their end portions in an inner diameter side as well as extending to the inner diameter side, and the first inner peripheral projection and the second inner peripheral projection exist on phases which do not lap over each other in an axial direction.

### Effect of the Invention

According to the dust cover for the ball joint on the basis of the present invention, there can be provided the dust cover for the ball joint which prevents the tracking property of the shaft side attaching portion from being lowered against the oscillation of the ball stud, and it is possible to improve the formability of the reinforcing ring.

### BRIEF EXPLANATION OF THE DRAWINGS

Fig. 1 is a cross sectional view of an installed state and shows a preferable embodiment of a dust cover for a ball joint according to the present invention;
Figs. 2A and 2B are cross sectional views of a substantial part obtained by cutting the preferable embodiment of the dust cover for the ball joint according to the present invention with a plane running through an axis on different phases, in which Fig. 2A is the cross sectional view of the substantial part obtained by cutting with the plane running through the axis and a first inner peripheral projection, and Fig. 2B is the cross sectional view of the substantial part obtained by cutting with the plane running through the axis and a second inner peripheral projection;
Fig. 3 is a perspective view showing a reinforcing ring in the preferable embodiment of the dust cover for the ball joint according to the present invention;
Fig. 4 is a cross sectional view showing the reinforcing ring in the preferable embodiment of the dust cover for the ball joint according to the present invention while cutting with a plane running through an axis thereof;
Fig. 5 is a cross sectional view of an operating state and shows the preferable embodiment of the dust cover for the ball joint according to the present invention;
Figs. 6A and 6B are cross sectional views of a substantial part obtained by cutting a metal mold for forming the reinforcing ring shown in Figs. 3 and 4 with a plane running through an axis on different phases, in which Fig. 6A is the cross sectional view of the substantial part obtained by cutting with a plane running through the axis and a first inner peripheral projection forming portion, and Fig. 6B is the cross sectional view of the substantial part obtained by cutting with a plane running through the axis and a second inner peripheral projection forming portion;
Fig. 7 is a cross sectional view of an installed state and shows an example of a dust cover for a ball joint according to a prior art;
Fig. 8 is a cross sectional view of an operating state and shows the example of the dust cover for the ball joint according to a prior art; and
Fig. 9 is a cross sectional view of the operating state and shows a structure which solves a problem of opening in the dust cover for the ball joint according to the prior art.

### DETAILED DESCRIPTION OF PREFERRED EMBODIMENT

A description will be given below of a preferable embodiment of a dust cover for a ball joint according to the present invention with reference to the accompanying drawings.

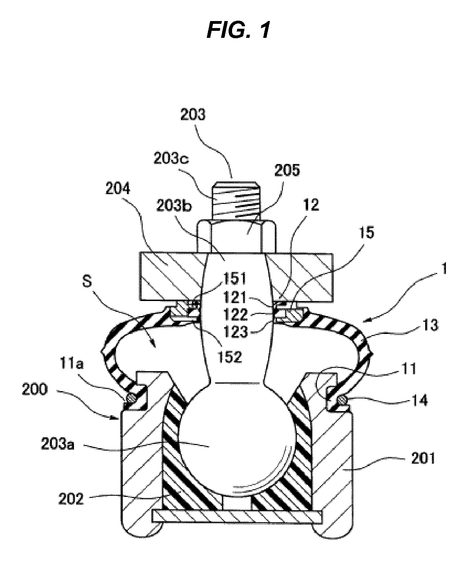

First of all, in Fig. 1, a ball joint 200 is constructed by a socket 201, a bearing 202 which is retained within the socket 201, and a ball stud 203 which is rotatably fitted its spherical end portion 203a to the bearing 202. A knuckle 204 is fixed to the shaft portion 203b of the ball stud 203 by a nut 205 which is threadably engaged with a threaded portion 203c, and a dust cover 1 according to an embodiment of the present invention is attached between the socket 201 and the shaft portion 203b for protecting the ball joint 200.

The dust cover 1 is formed by a rubber-like elastic material (a rubber material or a synthetic resin material having a rubber-like elasticity), is provided with a socket side attaching portion 11 which is fastened and fixed to an outer peripheral surface of the socket 201 of the ball joint 200 and has a relatively larger diameter, a shaft side attaching portion 12 which is fixed to an outer peripheral surface of the shaft portion 203b of the ball stud 203 and the knuckle 204 in a close contact state and has a relatively smaller diameter, and a tubular flexible membrane portion 13 which connects between the socket side attaching portion 11 and the shaft side attaching portion 12, and is formed as a whole into such an outer appearance that a cup is inverted in an uninstalled state.

In detail, the socket side attaching portion 11 of the dust cover 1 is structured such that an inner peripheral surface thereof is closely fitted with an appropriate fastening margin to an annular step portion which is formed on an outer peripheral surface in the vicinity of an end portion of the socket 201 of the ball joint 200 by the snap ring 14 fitted and attached to an annular groove 11 a in an outer periphery.

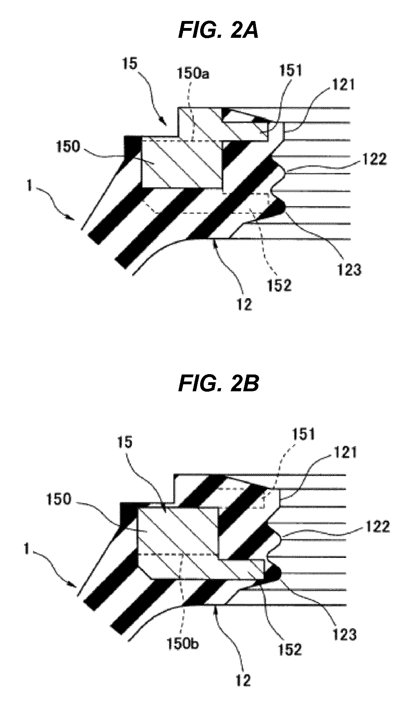

A plurality of seal protrusions 121 to 123 are formed as shown in Fig. 2 on an inner peripheral surface of the shaft side attaching portion 12 of the dust cover 1. The seal protrusions 121 to 123 are closely fitted with appropriate fastening margins to an outer peripheral surface of the shaft portion 203b of the ball stud 203 in an installed state of the dust cover 1 shown in Fig. 1, and are brought into close contact with the knuckle 204 in their outer end surfaces.

Further, a reinforcing ring 15 made of a synthetic resin is integrally buried in the shaft side attaching portion 12 of the dust cover 1. The reinforcing ring 15 is structured, as shown in figs, 2, 3 and 4, such that an annular main body portion 150, a first inner peripheral projection 151 and a second inner peripheral projection 152 are formed. The first inner peripheral projection 151 is formed at a predetermined interval in a circumferential direction as well as extending toward the outermost seal protrusion 121 from an outer end surface (an upper surface) 150a of the main body portion 150, and has a diameter of an end portion in an inner diameter side which is slightly greater than an inner peripheral surface of the seal protrusion 121. The second inner peripheral projection 152 is formed at a predetermined interval in a circumferential direction as well as extending toward the innermost seal protrusion 123 from an inner end surface (a lower surface) 150b of the main body portion 150, and has a diameter of an end portion in an inner diameter side which is slightly greater than an inner peripheral surface of the seal protrusion 123.

More specifically, the first inner peripheral projection 151 and the second inner peripheral projection 152 are provided at both ends in an axial direction in the main body portion 150 of the reinforcing ring 15, in other words, different axial positions from each other, the first inner peripheral projection 151 exists in a state in which the first inner peripheral projection 151 is buried in the shaft side attaching portion 12 while being positioned in an outer peripheral side of the seal protrusion 121, and the second inner peripheral projection 152 exists in a state in which the second inner peripheral projection 152 is buried in the shaft side attaching portion 12 while being positioned in an outer peripheral side of the seal protrusion 123.

In the illustrated example, the first inner peripheral projection 151 and the second inner peripheral projection 152 which are formed in the reinforcing ring 15 are provided twelve each at 30 degrees phase intervals, and are on the phases which do not lap over each other in an axial direction. More specifically, each of the first inner peripheral projections 151 is provided on an intermediate phase between the circumferentially adjacent second inner peripheral projections 152 and 152, and each of the second inner peripheral projections 152 is provided on an intermediate phase between the circumferentially adjacent first inner peripheral projections 151 and 151. Therefore, the first inner peripheral projection 151 and the second inner peripheral projection 152 are provided on the phases which are 15 degrees different from each other.

The dust cover 1 for the ball joint according to the present invention which is structured as mentioned above is structured such as to prevent dusts from making an intrusion into a fitting portion between the bearing 202 of the ball joint 200 and the spherical end portion 203a of the ball stud 203 from an external portion as well as preventing grease (not shown) which is filled at an appropriate amount in an internal space S from flowing out to the external portion, as shown in Fig. 1, and is structured such that the flexible membrane portion 13 freely deforms in connection with oscillation of the ball stud 203 in relation to the socket 201.

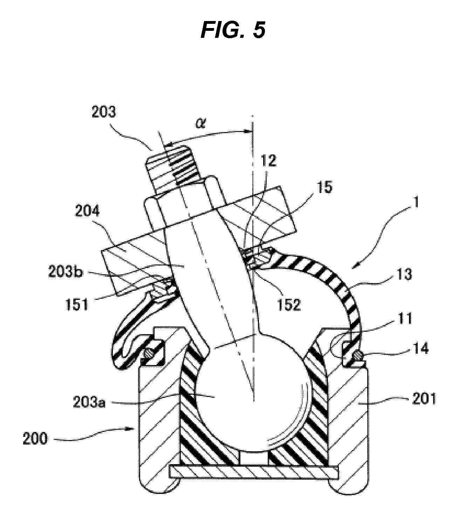

Further, according to the embodiment mentioned above, since the first inner peripheral projection 151 and the second inner peripheral projection 152 which are formed in the reinforcing ring 15 buried in the shaft side attaching portion 12 back up close contact force of the seal protrusions 121 and 123 of the shaft side attaching portion 12 applied to an outer peripheral surface of the shaft portion 203b of the ball stud 203, the tracking property against the oscillation of the shaft portion 203b of the ball stud 203 is compensated even if the retractility of the flexible membrane portion 13 is lowered by the hardening of the rubber-like elastic material in the dust cover 1 at the low temperature time. Further, the intermediate seal protrusion 122 is soft since a thickness thereof to the inner peripheral surface of the main body portion 150 of the reinforcing ring 15 is great, and the intermediate seal protrusion 122 maintains a stable close contact property with the shaft portion 203b. As a result, it is possible to effectively prevent reduction of a sealing performance due to "opening" that the shaft side attaching portion 12 is away from the shaft portion 203b of the ball stud 203 when the ball stud 203 is greatly oscillated at an angle α as shown in Fig. 5.

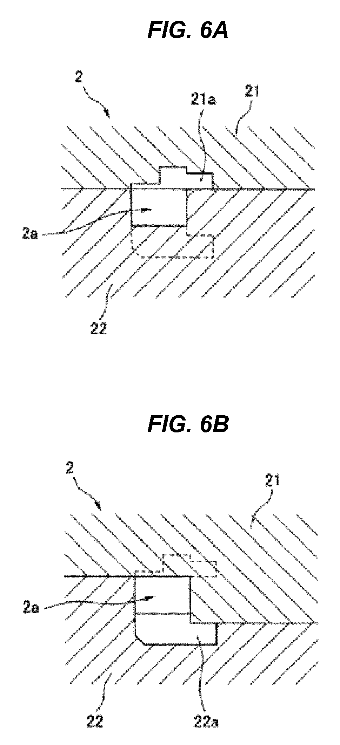

A description will be given of a forming die for the reinforcing ring according to the present invention. In the case that the first inner peripheral projection 151 and the second inner peripheral projection 152 are continuously provided like a collar in a circumferential direction and are lined up in the axial direction such as the reinforcing ring according to the prior art, the first inner peripheral projection 151 and the second inner peripheral projection 152 form an undercut when the reinforcing ring 15 is formed by the metal mold. As a result, the metal mold can not be formed into a simple double-split structure which is split into two sections in an axial direction, but has to be formed into a complicated split structure. On the contrary, according to the embodiment as mentioned above, since the first inner peripheral projection 151 and the second inner peripheral projection 152 which are formed in the reinforcing ring 15 are formed at the predetermined intervals in the circumferential direction and are provided on the phases which do not lap over each other in the axial direction, they do not form an undercut. As a result, the metal mold 2 used for forming the reinforcing ring 15 can be formed into the simple double-split structure which is split into two sections in the axial direction, as is exemplified in Fig. 6.

Figs. 6A and 6B are partial cross sectional views obtained by cutting the metal mold 2 with a plane running through an axis on different phases. In detail, Fig. 6A is a partial cross sectional view obtained by cutting with a plane running through the axis and a first inner peripheral projection forming portion, and Fig. 6B is a partial cross sectional view obtained by cutting a plane running through the axis and a second inner peripheral projection forming portion. More specifically, the metal mold 2 is constructed by a pair of split molds 21 and 22 which can be opened and closed in an axial direction (a vertical direction in Fig. 6), and an annular cavity 2a is formed between the split molds 21 and 22. A synthetic resin material for forming is filled in the cavity 2a through a gate and so on (not shown).

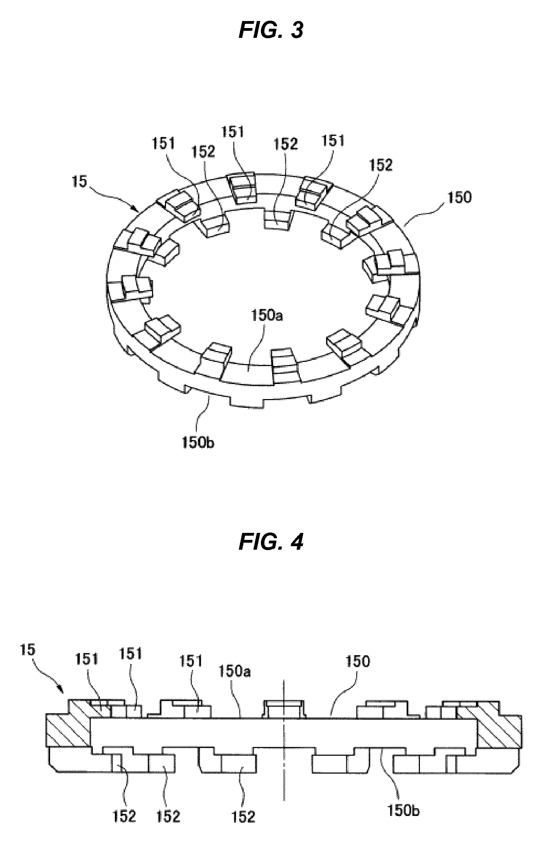

Further, in the cavity 2a, a portion (a first inner peripheral projection forming portion) 21 a forming the first inner peripheral projection 151 of the reinforcing ring 15 shown in Figs. 3 and 4 is formed in the one split mold 21, and a portion (a second inner peripheral projection forming portion) 22a forming the second inner peripheral projection 152 of the reinforcing ring 15 is formed in the one split mold 22. The first inner peripheral projection forming portion 21 a and the second inner peripheral projection forming portion 22a are provided on phases which are different at 15 degrees from each other. As a result, the second inner peripheral projection forming portion 22a by which the second inner peripheral projection 152 is shaped does not exist on the phase of the first inner peripheral projection forming portion 21 a by which the first inner peripheral projection 151 is shaped, and the first inner peripheral projection forming portion 21 a by which the first inner peripheral projection 151 is shaped does not exist on the phase of the second inner peripheral projection forming portion 22a by which the second inner peripheral projection 152 is shaped. Therefore, the undercut is not formed when the split molds 21 and 22 are opened in the axial direction after the formation.

Accordingly, it is possible to form the reinforcing ring 15 having the first inner peripheral projection 151 and the second inner peripheral projection 152 for maintaining the tracking property of the shaft side attaching portion 12 against the oscillation of the ball stud 203 as shown in Fig. 5, by the metal mold 2 having the simple split structure which is opened and closed only in the axial direction. As a result, since it is not necessary to form the metal mold into the complicated structure for enabling the mold release, and it is not necessary to form the reinforcing ring 15 into a plurality of separated parts and thereafter integrate, it is possible to prevent a manufacturing cost from being increased.

### Description of Reference Numerals

- 1: dust cover
- 12: shaft side attaching portion
- 121-123: seal protrusion
- 13: flexible membrane portion
- 15: reinforcing ring
- 151: first inner peripheral projection
- 152: second inner peripheral projection
- 2: metal mold
- 200: ball joint
- 203: ball stud
- 203b: shaft portion

## Claims

1. A dust cover for a ball joint, the dust cover comprising:
a reinforcing ring,
wherein the reinforcing ring is buried in a shaft side attaching portion which is closely fitted and fixed to an outer peripheral surface of a shaft portion of a ball stud of the ball joint,
wherein a first inner peripheral projection and a second inner peripheral projection are formed at different axial positions in said reinforcing ring at predetermined intervals in a circumferential direction, the first inner peripheral projection and the second inner peripheral projection having diameters which are slightly greater than an inner peripheral surface of said shaft side attaching portion in their end portions in an inner diameter side as well as extending to the inner diameter side, and
wherein the first inner peripheral projection and the second inner peripheral projection exist on phases which do not lap over each other in an axial direction.
